**Europäisches Patentamt**

**European Patent Office**

**Office européen des brevets**

(19)

(11) Veröffentlichungsnummer: **0 177 823**
**A1**

(12) # EUROPÄISCHE PATENTANMELDUNG

(21) Anmeldenummer: **85112024.6**

(22) Anmeldetag: **23.09.85**

(51) Int. Cl.⁴: **G 06 K 9/34**

(30) Priorität: **27.09.84 DE 3435499**

(43) Veröffentlichungstag der Anmeldung: **16.04.86**
**Patentblatt 86/16**

(84) Benannte Vertragsstaaten: **AT CH DE FR GB LI**

(71) Anmelder: **Siemens Aktiengesellschaft, Berlin und München Wittelsbacherplatz 2, D-8000 München 2 (DE)**

(72) Erfinder: **Postl, Wolfgang, Dipl.-Ing., Edelweissstrasse 11, D-8137 Berg (DE)**

(54) **Verfahren zur Selektion, insbesondere zur Selektion und Löschung horizontaler und/oder vertikaler Linien in digitalisierten Faksimiles.**

(57) Horizontale bzw. vertikale Einsfolgen, deren Längen einen vorgegebenen Schwellenwert überschreiten, werden ermittelt. Für ausgewählte Prüfpunkte jeder ermittelten Einsfolge wird ein Prüfmuster extrahiert, das aus den binären Farbwerten einer relativ zum Prüfpunkt definierten Punktmenge – im folgenden Indexmenge genannt – gebildet wird. Von diesem Prüfmuster wird ein Bitmuster – im folgenden Löschmuster genannt – abgeleitet und zumindest dann in ein Löschpunktfaksimile an die dem Prüfpunkt zugeordnete Stelle odernd kopiert, wenn das Löschmuster mindestens eine binäre Eins enthält. Dieses Löschpunktfaksimile wird für eine folgende Auswertung und/oder Weiterverarbeitung in ggf. codierter Form zumindest temporär und/oder abschnittsweise gespeichert. Das Verfahren sieht eine automatische Anpassung des Schwellenwerts an den bei einer ggf. vorher vorgenommenen Schriftzeichenerkennung identifizierten Schrifttyp vor.

0177823

84 P 1793 E

SIEMENS AKTIENGESELLSCHAFT
Berlin und München

Verfahren zur Selektion, insbesondere zur Selektion und Löschung
horizontaler und/oder vertikaler Linien in digitalisierten Faksimiles

Die vorliegende Erfindung betrifft ein Verfahren zur Selektion und Löschung horizontaler und/oder vertikaler Linien in digitalisierten Faksimiles.

Horizontale und – in geringerem Maße – vertikale Linien in Textdokumenten, insbesondere Formularen, stören bekannterweise bei der automatischen Schriftzeichenerkennung (OCR), insbesondere wenn sie mit Schriftzeichen zusammenhängen. Andererseits ist die Identifizierung solcher Linien ein wichtiges Hilfsmittel bei der automatischen Erkennung von Strukturen innnerhalb des Dokuments.

Es sind verschiedene Verfahren zum automatischen Auffinden geometrischer Strukturelemente in Dokumenten bekannt, die jedoch einen unangemessen hohen Aufwand mit sich bringen, wenn lediglich das Auffinden vertikaler und/oder horizontaler Linien beabsichtigt ist.

Der vorliegenden Erfindung liegt die Aufgabe zugrunde, ein Verfahren zu schaffen, mittels dessen horizontale und/oder vertikale Linien in digitalisierten Faksimiles von Dokumenten auf einfache Weise, insbesondere im Verlauf einer punkt- und zeilenweisen Abtastung des Dokuments, aufgefunden und gekennzeichnet werden können. Desweiteren soll das erfindungsgemäße Verfahren auf einfache Weise gestatten, solche aufgefundenen und gekennzeichneten Linien in dem Faksimile zu löschen und bei Bedarf wieder zu regenerieren, insbesondere dann, wenn in Betracht gezogen werden muß, daß diese Linien mit benachbarten Textzeichen zusammenhängen.

Diese Aufgabe wird durch ein Verfahren der eingangs genannten Art bzw. nach dem Oberbegriff des Patentanspruch 1 gelöst, das durch die in dem kennzeichnenden Teil dieses Patentanspruchs angegebenen Merkmale charakterisiert ist.

Vorteilhafte Weiterbildungen der vorliegende Erfindung sind durch die in den Unteransprüchen angegebenen Merkmale gekennzeichnet.

Im folgenden wird die vorliegende Erfindung anhand mehrerer Figuren im einzelnen beschrieben.

Fig. 1a    zeigt einen Ausschnitt aus einem digitalisierten Faksimile eines Ausschnitts aus einem Formular.

Fig. 1b    zeigt ein Ergebnis einer vereinfachten Variante des Verfahrens, wobei gelöschte Bildpunkte jeweils durch die Ziffer "1" in kleiner Schrift dargestellt sind.

Fig. 1c    zeigt ein Ergebnis des Verfahrens, wobei gelöschte Bildpunkte jeweils durch die Ziffern "1", "2" oder "3" dargestellt sind.

Fig. 2 zeigt ein Blockschaltbild einer Schaltungsanordnung zur Durchführung des erfindungsgemäßen Verfahrens.

Wie bereits erläutert, zeigt Fig. 1a einen Ausschnitt aus einem digitalisierten Faksimile eines Formulars, das eine Textzeichenfolge "IF E" enthält, die sich mit einen in dem Formular enthaltenen Querstrich überlappt. Hierbei wurde das in der CCITT-Empfehlung T4 beschriebene Digitalisierungsverfahren vorausgesetzt, wobei das Faksimile durch punkt- und zeilenweise Abtastung eines Dokuments mit Hilfe eines Fernkopierers oder einer anderen Abtasteinrichtung (Scanner, Kamera) gewonnen und durch Quantisierung der einzelnen Abtastwerte auf zwei Farbbereiche vorgenommen wird, die durch die Bitwerte "0" und "1" dargestellt werden. Es ist üblich, dem dunkleren Farbbereich den Wert "1" und dem helleren den Wert "0" zuzuordnen. Das erfindungsgemäß Verfahren ist jedoch von einer solchen Zuordnung unabhängig. Es eignet sich beispielsweise zur Selektion dunkler Linien auf hellem ebenso wie heller Linien auf dunklem oder roter Linien auf blauem Hintergrund. Es wird lediglich vorausgesetzt, daß eine Quantisierung derart vorgenommen wird, daß der Farbe der zu selektierenden Linien der binäre Farbwert "X" und der Farbe des Hintergrunds der binäre Farbwert "1-X" zugeordnet wird, wobei willkürlich X=0 oder X=1 gewählt werden kann. In der folgenden Beschreibung wird jedoch einheitlich X=1 vorausgesetzt.

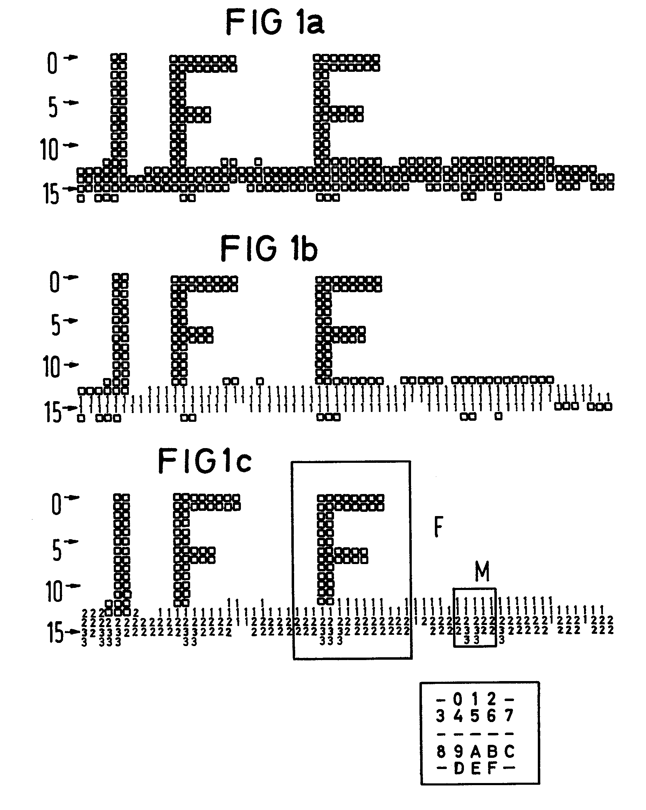

In Fig. 1 ist je ein Bildpunkt mit dem Farbwert "1" durch ein schwarzes Quadrat dargestellt. Die einzelnen Punktzeilen sind von 0 bis 15 numeriert. Jede fünfte Zeilennummer ist links angegeben.

Es wird in Betracht gezogen, daß die binären Farbwerte nach einer Übertragung und/oder Speicherung verfügbar sind, ggf. in irgendwie – z.B. mit dem in der CCITT-Empfehlung T4 beschriebenen Code – codierter Form. In diesem Fall ist im allgemeinen zur Durchführung des erfindungsgemäßen Verfahrens eine vorherige Decodierung erforderlich.

Im folgenden werden drei Verfahrensvarianten im einzelnen beschrieben, von denen die beiden ersten als vereinfachte Versionen des letztgenannten zu betrachten sind. Unter "Faksimile" wird dabei stets das digitalisierte und in irgendeiner Form codierte Faksimile verstanden.

Verfahrensvariante 1

Diese Variante stellt die einfachste Version des erfindungsgemäßen Verfahrens dar. In dem Faksimile werden Zeile für Zeile horizontale Folgen binärer Einsen (Einsfolgen) der Länge >L, wobei L ein vorgegebener Wert ist, gesucht und gelöscht, d.h. die Einsen werden durch Nullen ersetzt. Das Ergebnis ist für L=12 in Fig. 1b dargestellt. Die ersetzten Punkte sind durch die Ziffer "1" dargestellt. Es ist zu erkennen, daß mit diesem Verfahren die Separierung der drei Buchstaben gelungen ist. Unsauberkeiten, die durch Ungleichmäßigkeiten der Querstrichstärke verursacht werden, sind jedoch nicht beseitigt worden.

Die Ermittlung von Einsfolgen in Faksimiles ist Stand der Technik. Geeignete Einrichtungen sind notwendigerweise in allen Fernkopierern vorhanden, die den in der CCITT-Empfehlung T4 beschriebenen Code verarbeiten.

Das Verfahren läßt sich – wie auch die im folgenden beschriebenen Varianten – durch eine automatische Anpassung der Länge L an den Schrifttyp verbessern. Beispielsweise wird L gleich dem 1.5-fachen Wert der größten im Zeichenvorrat auftretenden Querlänge gewählt. Ist der Schrifttyp a priori nicht bekannt, so kann eine ggf. vor oder in Verbindung mit dem erfindungsgemäßen Verfahren vorgenommene Schriftzeichenerkennung, die unterschiedliche Schrifttypen beherrscht, zur Ermittlung eines günstigen Wertes von L herangezogen werden.

## Verfahrensvariante 2

In einer verbesserten Version des Verfahrens werden Einsfolgen der Länge >L wie bei Variante 1 gesucht. Es werden jedoch nicht nur diese durch Nullfolgen ersetzt, sondern auch Einsen, die unmittelbar ober- oder unterhalb dieser Einsfolgen liegen und deren nächsthöherer bzw. -tieferer Nachbarpunkt den Farbwert "0" hat. (Diese Punkte werden im folgenden als "O-Punkte" bzw. "U-Punkte" bezeichnet). Um einen Rückkkopplungseffekt zu vermeiden, wird der Ersatz von Eins- durch Nullfolgen nicht unmittelbar durchgeführt, sondern mit einer Verzögerung von mindestens zwei Zeilen, d.h. sobald eine Einsfolge in einer Zeile y gefunden worden ist, wird festgestellt, ob die Löschung eines darüber in der Zeile y-1 oder darunter in der Zeile y+1 liegenden Punktes angezeigt ist, und die für die Zeile y-2 fälligen Löschungen werden durchgeführt. Daraus ergibt sich, daß eine Pufferung von 4 Abtastzeilen erforderlich ist, nämlich der Zeilen y+2, y+1, y, y-1 und y-2, wenn das beschriebene erfindungsgemäße Verfahren unmittelbar auf von einer Abtasteinrichtung gelieferte Daten angewandt werden soll.

Fig. 1 c zeigt das Ergebnis des Verfahrens, wobei die Einspunkte, deren Löschung frühestens bei der Lauflängenermittlung in Zeile 12, 13 und 14 angezeigt wird, mit den Ziffern "1", "2" bzw. "3" markiert sind. Wie erkennbar, sind zwar die in Fig. 1 b verbliebenen Unsauberkeiten verschwunden, allerdings auch der Rest des unteren Querbalkens des "E", das nunmehr von einem "F" nicht mehr unterschieden werden kann – was bei Fig. 1 b noch durchaus möglich gewesen wäre. Um auch in solchen Fällen noch eine Schriftzeichenidentifizierung zu ermöglichen, ist es vorteilhaft, die gelöschten – d.h. durch "0" ersetzten – Punkte (Löschpunkte) in einer besonderen Datei aufzubewahren. Diese Datei wird im folgenden als "Löschpunktfaksimile" bezeichnet, womit angedeutet werden soll, daß sie ein Punkt-zu-Punkt-Abbild des digitalisierten Faksimile selbst ist, d.h. jeweils ein Punkt des Löschpunktfaksimile ist einem Punkt des Faksimile zugeordnet.

Bei der Schriftzeichenerkennung wird dann wie folgt vorgegangen:

Die einzelnen Zeichen werden isoliert, wobei beliebige – ggf. bekannte – Verfahren angewendet werden können. Vor der Identifizierung eines isolierten, jedoch noch nicht mit Sicherheit identifizierten Zeichens wird geprüft, ob das Löschpunktfaksimile in einem Zeichenfeld vorgegebener Größe, in dem das Zeichen enthalten ist (in Fig. 1 c durch den Rahmen F angedeutet), Löschpunkte ent-

0177823

hält. In diesem Fall wird das Identifizierungsverfahren "umgeschaltet". Beispielsweise wird dazu das ursprüngliche Faksimile (Fig. 1 a) zumindest im Bereich des
Zeichenfeldes durch exklusives Odern (x-Odern) des Löschpunktfaksimile mit
dem Faksimile Fig. 1 c regeneriert, und es wird anschließend das vereinfachte Verfahren angewandt, dessen Ergebnis in Fig. 1 b dargestellt ist.

Die Erzeugung des Löschpunktfaksimile erfolgt nach folgendem Schema:
Während der Lauflängenermittlung in Zeile y werden die dabei gefundenen
U-Punkte in Zeile y+1 des Löschpunktfaksimile abgelegt, die anderen "0" gesetzt,
während der Inhalt der Zeilen y und y-1 des Löschpunktfaksimile mit den dabei gefundenen L- bzw. O-Punkten geodert wird.

Zur Einsparung von Speicherplatz oder aus Kompatibilitätsgründen ist vorzugsweise vorgesehen, das Löschpunktfaksimile komprimiert zu speichern oder zu
übertragen, ggf. unter Verwendung des gleichen Code, der für die Codierung des
Eingabe- oder Ausgabefaksimiles (entspr. Fig. 1 a bzw. 1 c) vorgesehen ist.

Ebenso kann bei der Ermittlung der Einsfolgen, soweit sie für das vorliegende
Verfahren erforderlich ist, von ggf. aus anderen Gründen verfügbaren Lauflängen-Decodiereinrichtungen Gebrauch gemacht werden.

## Ausblicke auf verschiedene Anwendungen

Die Speicherung des Löschpunktfaksimile bietet neben der Verbesserung einer
automatischen Schriftzeichenerkennung noch den Vorteil, daß die Erkennung und
Auswertung horizontaler (und – wie weiter unten beschrieben – vertikaler)
Linienstrukturen ermöglicht wird, die z.B. für die automatische Erkennung von
Abbildungen in Faksimiles von illustrierten Texten verwertet werden können.
Solche Linienstrukturen sind beispielsweise Spaltenbegrenzer und Rahmen um
Abbildungen. In der DE-OS 25 16 332 wird ausdrücklich auf die Auswertung von
Spaltengrenzen bei der automatischen Erkennung von Abbildungen in Faksimiles
hingewiesen.

Auch die Erkennung graphischer Primitive in geometrischen Zeichnungen kann
durch die Vorab-Erkennung horizontaler und vertikaler Linien vereinfacht
werden.

Es wird deshalb auch in Betracht gezogen, die hier beschriebenen Verfahrensvarianten mit Verfahren zur der in der DE-OS 25 16 332 und der DE-OS 30 24 322 A1 als Vorstufe zur Erkennung von Text- oder Bildbereichen vorgeschlagenen Ermittlung weißer horizontaler und vertikaler Streifen (Weiß-blöcke) zu kombinieren. Diese Kombination bietet den Vorteil einer besonderen Wirtschaftlichkeit, weil jede Einrichtung zur Ermittlung von Einsfolgen implizit auch Information über die Position von Nullfolgen ausgibt, und umgekehrt.

Verfahrensvariante 3

Die Verfahrensvarianten 1 und 2 lassen sich als Sonderfälle der im folgenden beschriebenen Verfahrensvariante 3 betrachten.

Es werden Einsfolgen der Länge >L wie bei Variante 1 ermittelt. Für ausgewählte Prüfpunkte – beispielsweise jeden zweiten, ggf. jeden Punkt – einer so gefundenen Einsfolge wird aus dem Faksimile ein Prüfmuster extrahiert, das aus den binären Farbwerten einer relativ zum Prüfpunkt definierten Punktmenge (Indexmenge) gebildet wird. Von diesem Prüfmuster wird ein Bitmuster (Löschmuster) abgeleitet und in das oben erwähnte Löschpunktfaksimile – und zwar an die dem Prüfpunkt zugeordnete Stelle – odernd kopiert, worunter zu verstehen ist, daß der Wert eines Punktes des Löschpunktfaksimile von "0" in "1" geändert wird, wenn der Wert des darüberkopierten Bits des Bitmusters "1" war.

Sollte das von einem bestimmten Prüfmuster abgeleitete Löschmuster ausschließlich binäre Nullen enthalten, so kann der Kopiervorgang unterbleiben, weil er keine Veränderung des Löschpunktfaksimile bewirken würde.

Unter einer "relativ zu einem Punkt P definierten Punktmenge" wird die Gesamtheit einer bestimmten Anzahl (K) von Punkten $P_i$ (i=1..K) mit den Koordinaten $(x-x_i, y-y_i)$ verstanden, worin (x,y) die Koordinaten des Punktes P sind und die Punktmenge durch die relativen Positionen $(x_i, y_i)$ der Punkte $P_i$ definiert ist.

Betrachtet man beispielsweise die Verfahrensvariante Variante 2 als Sonderfall des erfindungsgemäßen Verfahrens, so besteht die Indexmenge aus den Punkten mit den Koordinaten (x,y-2), (x,y-1), (x,y+1) und (x,y+2) und ist durch die relativen Positionen (0,2), (0,1), (0,-1) und (0,-2) definiert. Es gibt in diesem Fall $2^4$ verschiedene Prüfmuster.

Die Ableitung des Löschmusters aus dem Prüfmuster erfolgt beispielsweise mittels einer Auswerteeinrichtung, der die binären Farbwerte der in der Indexmenge enthaltenen Punkte zugeführt werden, ggf. der Einfachheit halber auch eine Obermenge dieser Punkte, z.B. die Punkte einer rechteckig begrenzten Umgebung des Prüfpunktes, die aus den Punkten mit den Koordinaten $(x-n,...x+n; y-m,...y+m)$ besteht, wobei $(2 \times m+1)$ die Anzahl der Faksimile-Punktzeilen ist, über die sich die Indexmenge erstreckt. Das Verfahren erfordert die Pufferung einer von m abhängigen Anzahl von Punktzeilen.

Eine solche Auswerteeinrichtung kann auch durch einen Datenspeicher realisiert werden, dem die binären Farbwerte der in der Indexmenge enthaltenen Punkte als Adreßbits zugeführt werden.

In dem durch Variante 2 des Verfahren gegebenen Sonderfall ist $n=0$, $m=2$. Eine Umgebung mit $n=m=2$ ist in Fig. 1c durch ein Fenster M markiert; die Indexmenge ist in diesem Fall durch die relativen Positionen $(-1,-2)$, $(0,-2)$, $(1,-2)$, $(-2,-1)$, $(-1,-1)$, $(0,-1)$, $(1,-1)$, $(2,-1)$, $(-1,+2)$, $(0,+2)$, $(1,+2)$, $(-2,+1)$, $(-1,+1)$, $(0,+1)$, $(1,+1)$, $(2,+1)$,
definiert.

In Fig. 1c ist unter dem Fenster M das gleiche Fenster vergrößert dargestellt, wobei die der Indexmenge angehörigen Punkte durch sedezimale Ziffern $(0..F)$ ersetzt sind. Die nicht der Indexmenge angehörigen Punkte der in dem Fenster M enthaltenen Umgebung sind durch Striche "-" markiert.

Die Auswertung der mittleren Punktreihe des Fensters M erübrigt sich (weil sie bekannt, nämlich eine Einsfolge ist), solange sich das gesamte Fenster M innerhalb der Einsfolge befindet. Für die Randzonen ist eine Umschaltung der Auswerteeinrichtung vorgesehen, wobei ggf. ein erhöhter Zeitaufwand für die Auswertung in Kauf genommen wird.

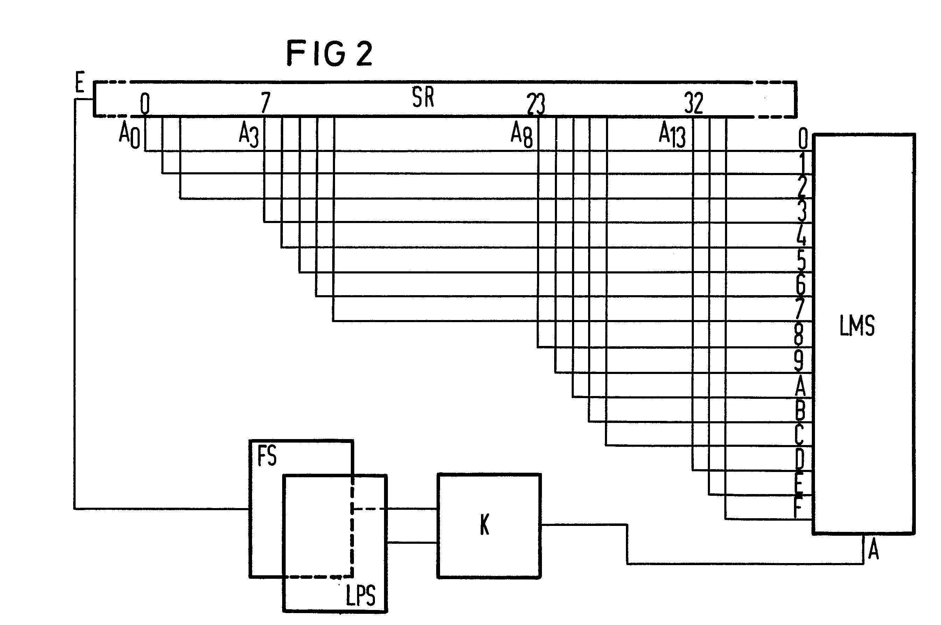

Eine einfache Realisierungsform einer solchen Auswerteschaltung ist in Fig. 2 in Form eines Blockschaltbildes dargestellt. An den Eingang E eines Schieberegisters SR werden die Bits des Faksimile – entweder unmittelbar aus einer Abtast- und Digitalisiereinrichtung oder, wie in Fig. 2 dargestellt, aus einem Faksimilespeicher FS, punkt- und zeilenweise zugeführt. Das Schieberegister SR besitzt an den

Stellen, die durch die relativen Positionen der in der Indexmenge enthaltenen Prüfpunkte gegeben sind, Abgriffe $A_1$, $A_1$, ..$A_{K-1}$, die mit den Adreßeingängen eines RAM- oder ROM-Speichers (Löschmusterspeichers) LMS verbunden sind. Dieser enthält an jeweils einem adressierten Speicherplatz das Löschmuster, das aus dem über die Adreßeingänge zugeführten Prüfmuster abgeleitet werden soll. Die in Fig. 2 eingezeichneten 16 Abgriffe befinden sich an den Stellen, die durch die in Fig. 1 c dargestellte Indexmenge gegeben sind. Über den mit $A_0$, $A_3$, $A_8$ und $A_{13}$ beschrifteten Abgriffen ist jeweils die Anzahl der Schieberegisterstufen zwischen dem jeweiligen Abgriff und $A_0$ angegeben. Dabei wurde die Anzahl der Bildpunkte pro Zeile mit n=8 angenommen. Die Adreßeingänge des Löschmusterspeichers LMS sind in Fig. 2 entsprechend der in Fig. 1 c angegebenen Zuordnung zu den Punkten der Indexmenge mit den Sedezimalzahlen 0...F beschriftet. Die günstigsten Löschmuster können beispielsweise heuristisch oder experimentell ermittelt und mit Hilfe eines Mikroprozessors in den Löschmusterspeicher LMS geladen werden. Die erforderliche Länge des Schieberegisters SR hängt von der Definition der Indexmenge ab, liegt jedoch zwischen $2 \times m \times n$ und $(2 \times m+1) \times n$ Stellen.

Der Ausgang A des Löschmusterspeichers LMS ist mit einer Kopiereinrichtung K verbunden, die das jeweils adressierte Löschmuster odernd in einen Löschpunktspeicher LPS kopiert, der das Löschpunktfaksimile zumindest temporär enthält. Als solcher eignet sich beispielsweise eine von mehreren Bitebenen eines Bildspeichers. Eine andere Bitebene kann, wie in Fig. 2 angedeutet, ggf. das binär digitalisierte Faksimile selbst enthalten. Für die längerfristige Speicherung des Löschpunktfaksimile, insbesondere in komprimierter Form, kann eine beliebige Computerdatei vorgesehen sein. Als Kopiereinrichtung eignen sich beliebige Bildprozessorsysteme. Solche Systeme bestehen häufig aus einem Allzweck-Mikroprozessor, der auch – neben anderen Aufgaben – die Steuerung des gesamten Selektions- und Löschvorgangs übernehmen kann, sowie einem oder mehreren Spezialprozessoren. Ein geeigneter Spezialprozessor ist beispielsweise der von der National Electronic Corporation (NEC) hergestellte sogenannte "Graphics Display Controller 7220".

Dieselbe Kopiereinrichtung kann im Bedarfsfall auch die Löschung oder Regenerierung horizontaler und vertikaler Linien in dem Faksimile durchführen, indem sie das Löschpunktfaksimile – ggf. bereichsweise – x-odernd in das Faksimile kopiert, worunter zu verstehen ist, daß der binäre Farbwert X eines Punktes des Faksimile durch 1-X ersetzt wird, wenn der Wert des darüberkopierten Bits "1" war. Voraussetzung für die Durchführung dieses Kopiervorgangs ist, daß zumindest die betroffenen Bereiche des Faksimile zum Zeitpunkt der Löschung oder Regenerierung in dem Faksimilespeicher FS gespeichert vorliegen.

Es wird in Betracht gezogen, während der Ausführung des erfindungsgemäßen Verfahrens in Verbindung mit einer automatischen Schrifterkennung eines von mehreren vorbereitend gespeicherten Löschmustern abhängig von dem jeweils identifizierten Schrifttyp auszuwählen und ggf. das Löschmuster auszutauschen, wenn ein neuer Schrifttyp gefunden wird, oder die Adressierung auf einen anderen Bereich des Löschmusterspeichers umzuschalten.

## Selektion vertikaler Linien

Die Selektion und Löschung vertikaler Linien in Faksimiles (Vertikalselektion) hat für die Schriftzeichenerkennung geringere Bedeutung. Dies gilt jedoch nicht für die zuvor erwähnte Bild- und Textbereicherkennung sowie für die Identifizierung geometrischer Graphik.

Diese Selektion kann mit den genau gleichen Verfahrensschritten erfolgen, wie sie zuvor für die Selektion horizontaler Linien (Horizontalselektion) beschrieben worden sind. Hierfür müssen in der Beschreibung lediglich die Koordinaten x und y miteinander vertauscht werden. Ob Horizontal- und Vertikal-Selektion sequentiell, simultan (ggf. mit Hilfe zweier Prozessoren) oder zeitlich verschachtelt erzeugt werden, ist für das erfindungsgemäß Verfahren nicht wesentlich. Es kann jedoch von Vorteil sein, für Horizontal- und Vertikalselektion partielle Löschpunktfaksimiles anzulegen, insbesondere wenn für einen folgenden Verfahrensschritt Informationen benötigt werden, die im besonderen eine der beiden Richtungen betreffen. Das Löschpunktfaksimile wird dann durch odernde Überlagerung der beiden partiellen Löschpunktfaksimiles erzeugt.

Es ist vorteilhaft, für die Speicherung des Löschpunktfaksimile sowie der partiellen Löschpunktfaksimiles ggf. verfügbare zusätzliche Bitebenen eines Bildwiederholspeichers zu verwenden.

Patentansprüche:

1. Verfahren zur Selektion, insbesondere zur Selektion und Löschung, horizontaler und/oder vertikaler Linien in einem digitalisierten Faksimile, dadurch gekennzeichnet , daß in einer binären Repräsentation des Faksimile, worin dem Farbbereich der Linien der binäre Wert "1" und dem Farbbereich des Hintergrunds der binäre Wert "0" zugeordnet ist, horizontale bzw. vertikale Einsfolgen ermittelt werden, deren Längen einen vorgegebenen Schwellenwert überschreiten, daß für ausgewählte Prüfpunkte jeder ermittelten Einsfolge ein Prüfmuster extrahiert wird, das aus den binären Farbwerten einer relativ zum Prüfpunkt definierten Punktmenge – im folgenden Indexmenge genannt – gebildet wird, daß von diesem Prüfmuster ein Bitmuster – im folgenden Löschmuster genannt – abgeleitet und zumindest dann in ein Löschpunktfaksimile an die dem Prüfpunkt zugeordnete Stelle odernd kopiert wird, wenn das Löschmuster mindestens eine binäre Eins enthält, und daß dieses Löschpunktfaksimile für eine folgende Auswertung und/oder Weiterverarbeitung in ggf. codierter Form zumindest temporär und/oder abschnittsweise gespeichert wird.

2. Verfahren nach Anspruch 1, dadurch gekennzeichnet , daß eine automatische Anpassung des Schwellenwerts an den bei einer ggf. vorher vorgenommenen Schriftzeichenerkennung identifizierten Schrifttyp durchgeführt wird.

3. Verfahren nach Anspruch 1 oder 2, dadurch gekennzeichnet , daß horizontale und/oder vertikale Linien des Faksimile insbesondere durch x-odernde Überlagerung des Faksimile mit dem Löschpunktfaksimile gelöscht, d.h. durch binäre Nullen ersetzt werden.

4. Verfahren nach Anspruch 1, dadurch gekennzeichnet , daß die Ableitung eines Löschmusters von einem Prüfmuster dadurch erfolgt, daß das Löschmuster einem bestimmten Speicherplatz eines Datenspeichers – im folgenden Löschmusterspeicher genannt – entnommen wird, wobei die Adresse des Speicherplatzes aus den Bitwerten der in der Indexmenge enthaltenen Punkte gebildet wird.

0177823

84 P 1793 E

5. Verfahren nach Anspruch 3, dadurch gekennzeichnet, daß das ursprüngliche Faksimile zum Zwecke einer weiteren Verarbeitung, insbesondere der automatischen Schriftzeichenerkennung OCR, bei Vorliegen eines von dem betreffenden Verarbeitungsprozeß gesetzten Kriteriums unter Verwendung des Löschpunktfaksimile, insbesondere durch x-odernde Überlagerung mit dem Löschpunktfaksimile, zumindest in einem von dem Verarbeitungsprozeß gesetzten Bereich regeneriert wird.

6. Verfahren nach Anspruch 5, dadurch gekennzeichnet, daß bei Verarbeitung durch OCR das Kriterium dadurch gesetzt wird, daß im Feld eines zwar isolierten, aber nicht mit Sicherheit erkannten Zeichens zumindest ein Löschpunkt im Löschpunktfaksimile angetroffen wird, und daß als zu regenerierender Bereich zumindest der Bereich dieses Zeichenfelds gesetzt wird.

7. Verfahren nach Anspruch 1, dadurch gekennzeichnet, daß bestimmte, nach besonderen Verfahren ermittelte Teilbereiche des Faksimile von der Kennzeichung durch Löschpunkte ausgeschlossen bleiben.

8. Verfahren nach einem oder mehreren der vorhergehenden Ansprüche, dadurch gekennzeichnet, daß das Verfahren mit einem an sich bekannten Verfahren zur Suche nach Weißrändern oder Druckspaltengrenzen als Begrenzer von Text- oder Bildbereichen kombiniert wird.

9. Einrichtung zur Durchführung des Verfahrens nach Anspruch 1 oder 4, dadurch gekennzeichnet, daß ein Schieberegister (SR) vorgesehen ist, dem die Bits des Faksimile punkt- und zeilenweise zugeführt werden und das an den Stellen, die durch die relativen Positionen der in der Indexmenge enthaltenen Prüfpunkte gegeben sind, Abgriffe ($A_0...A_{15}$) besitzt, die mit den Adreßeingängen eines Löschmusterspeichers (LMS) verbunden sind, dessen Ausgang mit einer Kopiereinrichtung (K), vorzugsweise einem Bildprozessorsystem, verbunden ist, die das im jeweils adressierten Speicherbereich enthaltene Löschmuster odernd in einen Löschpunktspeicher (LPS) kopiert, der das Löschpunktfaksimile zumindest temporär enthält, und die im Bedarfsfall das Löschpunktfaksimile ggf. bereichsweise in den in einem Faksimilespeicher (FS) gespeicherten betroffenen Bereich des Faksimile x-odernd kopiert.

0177823

1/2

FIG 1a

FIG 1b

FIG 1c

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 102 482 (HENDRIX ELECTRONICS INC.) * Figur 3; Seite 9, Zeile 20 - Seite 16, Zeile 9 * | 1,3 | G 06 K 9/34 |
| Y | | 4,9 | |
| | --- | | |
| Y | US-A-4 003 024 (RIGANATI et al.) * Zusammenfassung; Figur 4 * | 4,9 | |
| | --- | | |
| A | IBM TECHNICAL DISCLOSURE BULLETIN, Band 15, Nr. 5, Oktober 1972, Seiten 1684-1686, New York, US; K. KERCHMAR: "Line filter" * Insgesamt * | 1 | |
| | ----- | | **RECHERCHIERTE SACHGEBIETE (Int. Cl.4)** |
| | | | G 06 K 9/00 |

Der vorliegende Recherchenbericht wurde für alle Patentansprüche erstellt.

| Recherchenort | Abschlußdatum der Recherche | Prüfer |
|---|---|---|
| DEN HAAG | 03-01-1986 | SONIUS M.E. |